# FASCICULE DE BREVET EUROPEEN

(11) **EP 0 844 219 B1**
(45) Date de publication et mention de la délivrance du brevet: **17.10.2001**
(21) Numéro de dépôt: 97402791.4
(22) Date de dépôt: 20.11.1997
(51) Int. Cl.: C03C 17/36

(54) **Vitrage comprenant un substrat muni d'un empilement de couches minces pour la protection solaire et/ou l'isolation thermique**
Glassubstrate beschichtet mit einem Dünnschichtaufbau für Sonnenschutz und/oder thermisch Isolierung
Glazing comprising a substrate with a stack of thin layers for solar protection and/or thermal insulation

(30) Priorité: 21.11.1996 FR 9614194
(43) Date de publication de la demande: 27.05.1998
(73) Titulaire: SAINT-GOBAIN GLASS FRANCE, 92400 Courbevoie (FR)
(72) Inventeur: Brochot, Jean-Pierre, 75014 Paris (FR); Didier, Fabrice, 92360 Meudon La Foret (FR)
(74) Mandataire: Renous Chan, Véronique

(56) Documents cités:
- EP-A- 0 638 528
- EP-A- 0 722 913
- FR-A- 2 733 495

## Description

L'invention concerne les substrats transparents, notamment en matériau rigide minéral comme le verre ou en matériau organique de type polymère rigide, semi-rigide ou souple du type polycarbonate, polyméthacrylate de méthyle PMMA, polyéthylène téréphtalate PET, lesdits substrats étant revêtus d'un empilement de couches minces comprenant au moins une couche à comportement de type métallique pouvant agir sur le rayonnement solaire et/ou le rayonnement infrarouge de grande longueur d'onde.

L'invention concerne plus particulièrement l'utilisation de tels substrats pour fabriquer des vitrages d'isolation thermique et/ou de protection solaire. Ces vitrages sont destinés aussi bien à équiper les bâtiments que les véhicules, en vue notamment de diminuer l'effort de climatisation et/ou de réduire une surchauffe excessive entraînée par l'importance toujours croissante des surfaces vitrées dans les habitacles.

Un type d'empilement de couches connu pour conférer aux substrats de telles propriétés est constitué d'au moins une couche métallique, comme une couche d'argent, qui se trouve disposée entre deux couches en matériau diélectrique. Cet empilement est généralement obtenu par une succession de dépôts effectués par une technique utilisant le vide comme la pulvérisation cathodique éventuellement assistée par champ magnétique.

Il est ainsi connu du brevet EP-0 638 528 un vitrage, plus particulièrement un vitrage multiple du type double-vitrage destiné au bâtiment, dont au moins un des substrats en verre qui le composent comporte un empilement de couches minces consistant en deux couches d'argent intercalées avec trois revêtements en matériau diélectrique. Selon ce document, la première couche d'argent, c'est-à-dire celle qui se trouve la plus proche du substrat porteur de l'empilement, est choisie plus mince que la seconde, notamment de manière à ce que son épaisseur corresponde à environ 65% de l'épaisseur de la seconde couche d'argent. Cette « dissymétrie » dans l'épaisseur des deux couches fonctionnelles de l'empilement s'est revélée avantageuse, en ce sens qu'elle permet l'obtention de vitrages présentant une sélectivité satisfaisante, si l'on définit la sélectivité S par le rapport de la transmission lumineuse T_{L} et du facteur solaire FS (défini lui-même par le rapport entre l'énergie totale entrant dans le local à travers le vitrage considéré et l'énergie solaire incidente). En outre, cette dissymétrie permet d'obtenir des vitrages dont l'aspect visuel en réflexion est esthétique, notamment en présentant une coloration agréable, dans les bleus ou les bleu-verts mais très neutre, très « lavée de blanc ».

Cependant, le type d'empilement de couches préconisé dans ce document est encore susceptible d'amélioration, tout particulièrement en ce qui concerne ses performances thermiques. Ainsi les vitrages décrits présentent au mieux une valeur de facteur solaire FS de 38%, alors que désormais on vise à fabriquer des vitrages dont le facteur solaire puisse être abaissé à des valeurs inférieures ou égales à 32% et même inférieures ou égales à 30%.

Le but de l'invention est alors de mettre au point un nouveau type d'empilement de couches minces à deux couches réfléchissant les rayonnements dans le rayonnement solaire et/ou dans l'infrarouge, empilement qui puisse permettre l'obtention de vitrages dont le facteur solaire soit fortement abaissé, sans que ce gain en termes de propriétés thermiques ne s'opère au détriment de ses propriétés optiques, notamment en conservant une sélectivité suffisante et/ou une colorimétrie, tout particulièrement en réflexion extérieure, satisfaisante.

L'objet de l'invention concerne un vitrage comprenant au moins un substrat transparent muni d'un empilement de couches minces dénommé « A » et qui comporte successivement :
□ un premier revêtement en matériau diélectrique,
□ une première couche dite « fonctionnelle » à propriétés de réflexion dans le rayonnement solaire et/ou l'infrarouge, notamment métallique,
□ un second revêtement en matériau diélectrique,
□ une seconde couche dite « fonctionnelle » à propriétés de réflexion dans le rayonnement solaire et/ou l'infrarouge, notamment métallique et de même nature que la première couche fonctionnelle,
□ un troisième revêtement en matériau diélectrique.

Selon l'invention, les épaisseurs des deux couches fonctionnelles ont été sélectionnées de manière à remplir deux conditions :
□ d'une part, la somme de leurs épaisseurs géométriques est supérieure ou égale à 25 nm,
□ d'autre part, le rapport de l'épaisseur de la première couche fonctionnelle (la plus proche du substrat porteur de l'empilement) sur l'épaisseur de la seconde couche fonctionnelle est inférieure ou égale à 0,55, notamment inférieure ou égale à 0,52.

La combinaison de ces deux conditions permet au vitrage dont fait partie le substrat ainsi revêtu de présenter un facteur solaire FS inférieur ou égal à 32%, mais également de présenter une couleur en réflexion extérieure très neutre, très agréable et qui correspond, dans le système de colorimétrie (L, a*, b*) à des valeurs de a* et b*négatives et, en valeurs absolues inférieures à 4, de préférence inférieures à 3. (Ces données spectrophotométriques sont à comprendre avec le vitrage constitué que de substrats clairs. Comme explicité ultérieurement, ces valeurs sont à moduler si au moins un des substrats est teinté).

En imposant une épaisseur totale minimale de couches fonctionnelles plus importante et en accentuant très fortement la « dissymétrie » entre les épaisseurs de ces deux couches par rapport à l'enseignement du brevet européen EP-0 638 528, l'invention a donc permis d'établir un nouveau compromis entre performances thermiques et performances optiques, qui est très avantageux. Jusque là, on ne pouvait envisager d'atteindre des valeurs de facteur solaire de cet ordre qu'au détriment de l'aspect en réflexion extérieure et/ou de la sélectivité du vitrage. En effet, si l'abaissement de la valeur de facteur solaire est lié assez étroitement à l'augmentation de l'épaisseur totale des couches réfléchissantes, cette augmentation était connue pour perturber l'aspect optique du vitrage, notamment en lui conférant une couleur trop intense et/ou de teinte peu recherchée en réflexion, et/ou en diminuant de manière trop nette son degré de transparence. La solution trouvée par l'invention, avec des couches fonctionnelles d'épaisseurs extrêmement différentes, a permis de manière tout-à-fait surprenante de sortir de cette « impasse », en permettant de conserver au vitrage une couleur neutre et agréable en réflexion et/ou une sélectivité T_{L}/FS de l'ordre de 2, tout en abaissant spectaculairement la valeur de FS. Tout se passe comme si le fait de choisir des couches fonctionnelles d'épaisseurs aussi nettement différentes permettait d'atténuer, voire de supprimer, les conséquences préjudiciables sur le plan optique d'une épaisseur totale de couches réfléchissantes d'au moins 25nm.

Subsidiairement, les vitrages revêtus selon l'invention présentent en outre l'avantage que l'aspect en réflexion « neutre », précédemment quantifié par les valeurs de a* et b*, reste quasiment inchangé, quel que soit l'angle d'incidence avec lequel le vitrage est observé. Cela signifie qu'un spectateur extérieur, au vu d'une façade d'un bâtiment entièrement équipée de tels vitrages, n'a pas l'impression visuelle d'une modification de teinte selon l'endroit de la façade où son regard se pose. Ce caractère d'homogénéité d'aspect est très intéressant, car très recherché actuellement des architectes dans le bâtiment.

De même, un avantage subsidiaire est que l'on a pu constater que les vitrages selon l'invention étaient assez « stables » en colorimétrie en réflexion extérieure, en ce sens que de légères variations d'épaisseur de l'une des couches de l'empilement ne se traduisent pas par des défauts d'aspect flagrants d'un vitrage à l'autre ou à la surface d'un même vitrage. C'est un point qui est très important sur le plan industriel, où l'on fabrique des vitrages de grande taille et/ou en grande série avec l'objectif de garder aspects et performances les plus uniformes possibles d'une série de vitrages à l'autre et, surtout, d'une zone à l'autre d'un même vitrage.

Avantageusement, le rapport de l'épaisseur de la première couche fonctionnelle sur l'épaisseur de la seconde couche fonctionnelle est choisi inférieur ou égal à 0,51, de préférence inférieur ou égal à 0,50 et est notamment compris entre 0,40 et 0,50, de préférence entre 0,45 et 0,48. De même, de préférence, la somme des épaisseurs de ces deux couches fonctionnelles est comprise entre 25 et 35 nm, notamment entre 27 et 33 nm.

Avantageusement, une au moins des deux couches fonctionnelles, notamment les deux, sont en argent ou à base d'argent, éventuellement sous forme d'un alliage avec un autre métal minoritaire.

Pour remplir les conditions quant aux différences d'épaisseurs entre les deux couches fonctionnelles, on peut notamment sélectionner l'épaisseur de la première dans la gamme comprise entre 8 et 13 nm et l'épaisseur de la seconde dans la gamme comprise entre 15 et 22 nm.

Par ailleurs, l'aspect visuel du vitrage, aussi bien en réflexion qu'en transmission, peut être également affiné et contrôlé par une sélection adéquate des matériaux et des épaisseurs relatives des trois revêtements de matériau diélectrique.

Ainsi, selon une variante non limitative de l'invention, on choisit l'épaisseur optique du premier revêtement supérieure à celle du troisième. L'épaisseur optique du premier revêtement peut ainsi correspondre à au moins 110% de l'épaisseur optique du troisième, notamment à au moins 120 à 150%, notamment 130 à 140% de l'épaisseur optique de ce dernier.

Dans ce cas de figure, notamment, il est également recommandé de sélectionner l'épaisseur optique du second revêtement en matériau diélectrique de manière à ce qu'elle soit supérieure à la somme des épaisseurs optiques des deux autres. L'épaisseur du deuxième revêtement en matériau diélectrique peut ainsi correspondre à au moins 115%, notamment à 120 à 130% de ladite somme.

Il est également préférable que la somme des épaisseurs optiques de ces trois revêtements soit comprise entre 280 et 340 nm, et soit notamment d'environ 300 nm.

En termes de choix de matériau pour cet empilement de couches minces, il est recommandé de surmonter au moins une des couches fonctionnelles, notamment les deux, d'une fine couche « barrière », et ceci surtout quand les revêtements diélectriques qui les surmontent sont déposés par pulvérisation cathodique réactive en présence d'oxygène. Ces couches barrières protègent ainsi les couches fonctionnelles qui sont métalliques du contact avec l'oxygène, en s'oxydant elles-mêmes au moins partiellement lors du dépôt du revêtement diélectrique supérieur. Elles sont de préférence d'une épaisseur comprise entre 0,5 et 4 nm, et notamment choisies parmi l'un au moins des métaux suivants : Ti, Ta, Nb, Ni, Cr, Zn, Sn ou en alliage de type acier inoxydable ou Ni-Cr.

Au moins un des trois revêtements en matériau diélectrique, et de préférence les trois, comprennent au moins une couche à base d'oxyde métallique ou de mélange d'oxydes métalliques, choisis de préférence parmi l'oxyde de bismuth Bi₂O₃, l'oxyde d'étain SnO₂, l'oxyde de zinc ZnO, l'oxyde de tantale Ta₂O₅, l'oxyde de niobium Nb₂O₅, l'oxyde de tungstène WO₃, l'oxyde de titane TiO₂. Il peut aussi s'agir de composé à base de silicium du type oxyde de silicium SiO₂, oxynitrure de silicium SiOₓN_{y} ou oxycarbure de silicium SiOₓ C_{y}. Peuvent aussi être utilisés les matériaux à base de nitrure, du type nitrure de silicium Si₃N₄, nitrure d'aluminium AIN ou un nitrure « mixte » du type SiₓAl_{y}N_{z}. En général, tous les matériaux, notamment tous les oxydes du type de ceux mentionnés précédemment, sont de préférence choisis avec un indice de réfraction de l'ordre de 1,50 à 2,5, notamment de l'ordre de 1,8 à 2,3.

En fait chaque revêtement diélectrique peut être composé d'une unique couche ou de plusieurs couches superposées dont les propriétés peuvent avantageusement se compléter.

Comme première variante non limitative concernant le choix des matériaux diélectriques, on peut, avantageusement, prévoir que le premier et/ou le second des revêtements comprennent, juste sous l'une et/ou l'autre des couches fonctionnelles, une couche à base d'oxyde de zinc, matériau connu pour faciliter le « mouillage », le nappage, des couches du type argent. On peut notamment prévoir que l'un ou l'autre de ces deux revêtements présente une superposition de couches du type (Nb₂O₅ ou Ta₂O₅ ou WO₃ ou SnO₂ ou Bi₂O₃)/ZnO, comme cela est par exemple envisagé dans le brevet européen EP-0 678 484.

D'autres matériaux connus pour faciliter le « mouillage » des couches à base d'argent sont, par exemple, l'oxyde de tantale ou l'oxyde de niobium, qui peuvent faire partie de séquences du type SnO₂/Ta₂O₅ ou SnO₂/Nb₂O₅, comme cela est connu du brevet européen EP-0 611 213.

Comme autre variante non limitative concernant le choix des matériaux diélectriques, il est avantageux de prévoir que le troisième revêtement comprenne une couche à base d'AIN, de Si₃N₄ ou de SiₓAlₓN_{z}, ce type de matériau pouvant permettre, en cas de traitement thermique du substrat postérieurement au dépôt de l'empilement, de protéger les couches fonctionnelles de l'oxydation par l'atmosphère ambiante, ces matériaux constituant des barrières efficaces vis-à-vis de l'oxygène. On peut souligner également que les nitrures du type Si₃N₄, qui ont une dureté assez importante, peuvent permettre d'améliorer la durabilité mécanique de l'empilement de couches dans son ensemble.

Le substrat sur lequel est déposé l'empilement de couches minces peut être d'origine minérale, en verre tout particulièrement. Il peut aussi être d'origine organique, notamment à base de polymère rigide ou semi-rigide du type polycarbonate PC, polyméthacrylate de méthyle PMMA. On peut aussi déposer l'empilement sur des substrats semi-rigides ou souples du type polyéthylène téréphtalate PET, substrats qui sont ensuite associés par feuilletage à un substrat rigide.

Le substrat peut être choisi clair, du type verre silico-sodo-calcique clair. Il peut aussi être choisi teinté dans la masse. (S'il est choisi clair, il peut cependant être associé à un substrat en verre teinté dans la masse une fois assemblé en vitrage du type vitrage multiple, vitrage feuilleté). Le verre teinté dans la masse, non muni (ou pas encore muni) de l'empilement de couches minces, peut avantageusement présenter, selon l'Illuminant D₆₅, pour une épaisseur de 4 mm, une transmission lumineuse T_{L} comprise entre 65% et 90%, une transmission énergétique T_{E} comprise entre 40% et 80%, une longueur d'onde dominante de couleur en transmission comprise entre 470 nm et 525 nm, et une pureté de couleur en transmission comprise entre 0,4% et 4%. Dans le système de colorimétrie (L; a*, b*), cet aspect colorimétrique en transmission se traduit par des valeurs de a* comprises entre -9 et 0 et des valeurs de b* comprises entre -4 et +2. Il peut notamment s'agir d'un verre du type de celui commercialisé par SAINT-GOBAIN VITRAGE sous le nom de « Parsol », notamment ceux de teinte verte ou grise. Il peut aussi s'agir des verres de couleur verte, commercialisé par SAINT-GOBAIN sous la dénomination « TSA », « TSA²⁺ », dont la composition est notamment décrite dans les brevets européens EP-0 616 883; EP-0 644 164; EP-0 722 427; WO-96/00394.

La sélection du verre teinté va notamment se faire en fonction de la T_{L} finale ou de la colorimétrie en réflexion que l'on recherche pour le vitrage dans son ensemble.

Il va de soi qu'au cas où le substrat est choisi coloré, la colorimétrie, notamment en réflexion, du vitrage se trouve modifiée par rapport à celle du vitrage à substrat clair. Ainsi, s'il s'agit de verre teinté dans les verts (comme les verres de type TSA précédemment mentionnés), les valeurs de a* et b* en réflexion peuvent, par rapport aux valeurs indiquées plus haut se trouver modifiées, notamment en restant négatives mais alors en dépassant plus ou moins le chiffre de 3 en valeurs absolues (la même remarque s'applique si l'empilement est disposé sur un substrat clair, mais si ledit substrat se trouve associé, dans le vitrage, à un autre substrat qu, lui, est coloré). De même, la transmission lumineuse du vitrage, s'il incorpore au moins un substrat teinté dans la masse, va se trouver modifiée, abaissée par rapport à celle qu'aurait le même vitrage avec le même empilement de couches mais n'utilisant aucun substrat teinté dans la masse.

Le vitrage qui comprend le substrat revêtu selon l'invention peut avantageusement présenter la structure d'un vitrage multiple, notamment d'un double-vitrage. Le vitrage multiple peut comporter plusieurs substrats revêtus selon l'invention. Généralement, l'empilement de couches dans le double-vitrage, est disposé en faces 2 et/ou 3. Les faces d'un vitrage multiple sont conventionnellement, de manière connue, numérotées à partir de la face la plus extérieure au local (ou à l'habitacle) une fois le vitrage monté dans le bâtiment (ou le véhicule). Un tel double-vitrage peut alors présenter selon l'Illuminant D₆₅ une transmission lumineuse T_{L} de l'ordre de 50 à 65% et un facteur solaire FS de l'ordre de 25 % à 32 %, donc une sélectivité de l'ordre de 2.

Le vitrage qui comprend le substrat revêtu selon l'invention peut également faire partie d'un vitrage feuilleté.

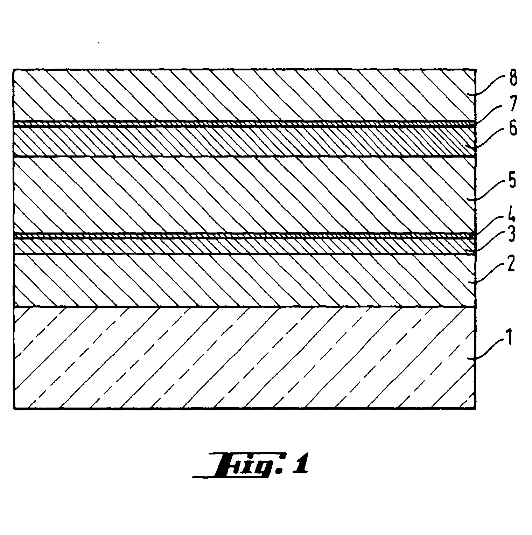

Les détails et caractéristiques avantageuses de l'invention ressortent des exemples suivants non limitatifs, illustrés à l'aide de la figure 1.

On précise dès à présent que, dans tous ces exemples, les dépôts successifs des couches de l'empilement s'effectuent par pulvérisation cathodique assistée par champ magnétique, mais que toute autre technique de dépôt peut être envisagée à partir du moment où elle permet un bon contrôle et une bonne maîtrise des épaisseurs des couches à déposer.

Les substrats sur lesquels sont déposés les empilements sont des substrats de verre silico-sodo-calcique de 6 millimètres d'épaisseur. Ils sont assemblés en double-vitrage à un autre substrat identique au premier mais démuni de couches, par l'intermédiaire d'une lame de gaz de 12 millimètres. Le gaz choisi est ici de l'argon. (Il peut être remplacé par de l'air, du krypton ou tout autre gaz rare ou mélange d'au moins deux de ces gaz).

La figure 1 représente l'empilement selon l'invention et ne respecte pas les proportions quant aux épaisseurs des couches afin que sa lecture en soit facilitée. On y voit le substrat 1 prédéfini, surmonté d'une première couche d'oxyde d'étain 2, d'une première couche d'argent 3, d'une couche barrière en Nb (partiellement oxydée) 4, d'une seconde couche d'oxyde d'étain 5, d'une seconde couche d'argent 6, d'une autre couche barrière 7 identique à la précédente et finalement d'une dernière couche 8 à nouveau en oxyde d'étain.

L'installation de dépôt comprend au moins une chambre de pulvérisation munie de cathodes équipées de cibles en matériaux appropriés sous lesquels le substrat 1 passe successivement. Ces conditions de dépôt pour chacune des couches sont les suivantes :
□ les couches 3, 6 à base d'argent sont déposées à l'aide d'une cible en argent, sous une pression de 0,8 Pa dans une atmosphère d'argon,
□ les couches 2, 5, 8 à base de SnO₂ sont déposées par pulvérisation réactive à l'aide d'une cible d'étain, sous une pression de 0,8 Pa et dans une atmosphère argon/oxygène dont 36% volumique d'oxygène,
□ les couches 4, 7 à base de Nb sont déposées à l'aide d'une cible en niobium, toujours sous la même pression et dans une atmosphère d'argon.

Les densités de puissance et les vitesses de défilement du substrat 1 sont ajustées de manière connue pour obtenir les épaisseurs de couches voulues.

### EXEMPLES COMPARATIFS 1 à 4

Les exemples 1 à 4 suivants sont des exemples comparatifs, en ce sens que, dans les quatre empilements, ils utilisent
□ soit des couches d'argent 3, 6 d'épaisseur totale insuffisante (exemple 1),
□ soit des couches d'argent 3, 6 dont les épaisseurs ne sont pas suffisamment différentes l'une de l'autre (exemples 2, 3 et 4).

Le tableau 1 ci-dessous précise pour, chacun des quatre exemples, la nature et les épaisseurs (en nanomètres) des couches de l'empilement en question. Les couches barrières 4, 7 sont notées Nb, sachant qu'elles sont en fait au moins partiellement oxydées une fois toutes les couches déposées. Ce tableau indique également, sans unité, le rapport entre l'épaisseur de la première couche d'argent 3 et de la seconde couche d'argent 6 : Ag(3)/Ag(6) ainsi de l'épaisseur totale des deux couches 3 et 6 en nm, Ag(3) + Ag(6) :

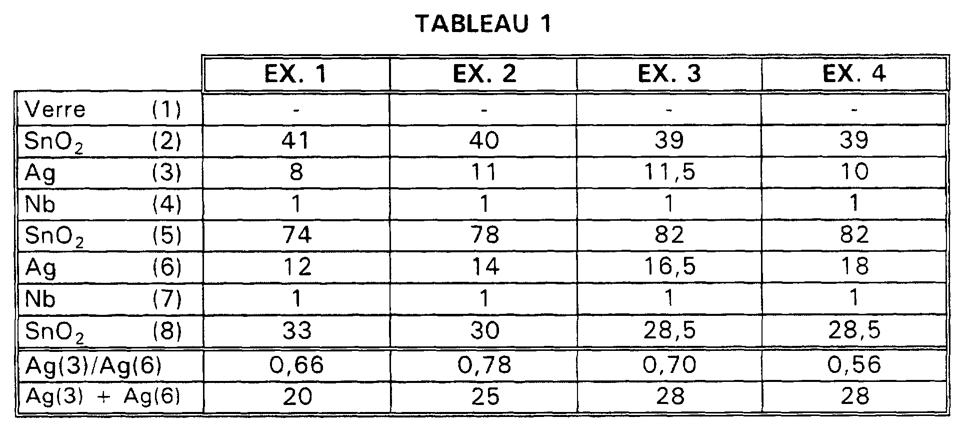

Le tableau 2 ci-dessous indique, pour chacun de ces exemples :
□ les valeurs de transmission lumineuse T_{L} en % (illuminant D₆₅),
□ le facteur solaire FS (selon la norme DIN 67507 - annexe A233) en %,
□ la longueur d'onde dominante en transmission λ(T) et la pureté de couleur en transmission p(T),
□ la valeur de réflexion lumineuse extérieure R_{L} en % (illuminant D₆₅)
□ la valeur de pureté de couleur en réflexion p(R)
□ les valeurs de a* et b* dans le système de colorimétrie (L, a*, b*) en réflexion :

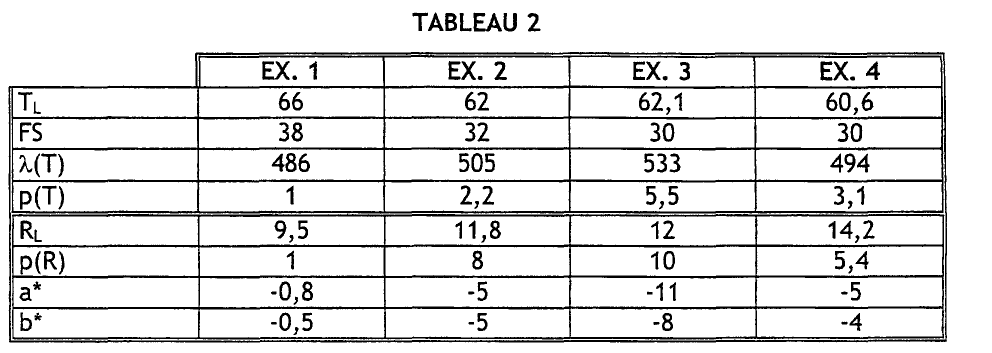

### EXEMPLES CONFORMES A L'INVENTION 5 et 6

Les exemples respectent les caractéristiques concernant les deux couches d'argent préconisées par l'invention.

Le tableau 3 ci-dessous regroupe pour ces deux exemples les mêmes informations que le tableau 1 précédent :

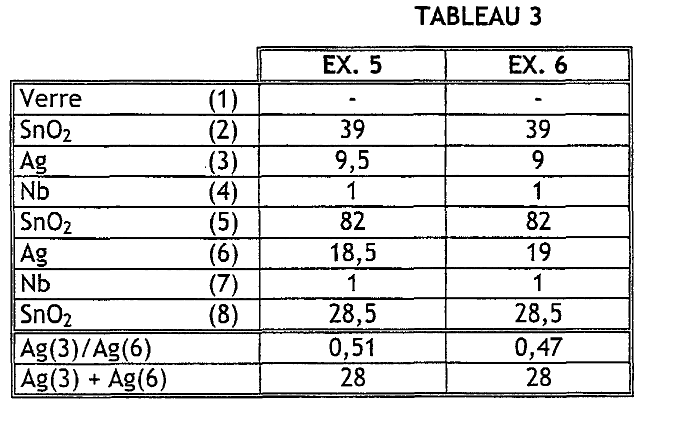

Le tableau 4 ci-dessous regroupe pour ces deux exemples les mêmes informations que le tableau 2 précédent :

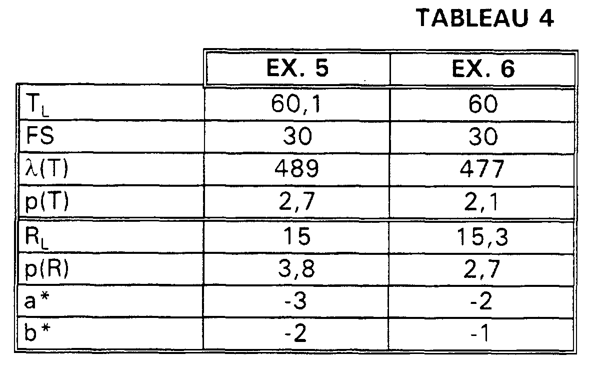

Toutes les mesures de colorimétrie rassemblées dans les tableaux 2 et 4 ont été effectuées à incidence normale.

(?) D'autres mesures de a* et b* en réflexion ont été effectuées sur l'exemple 5 selon l'invention, à incidence non normale, notamment avec un angle d'incidence par rapport à la normale au plan du double-vitrage de 45° et de 65°. Le tableau 5 ci-dessous regroupe ces différentes valeurs en fonction de l'angle d'incidence θ en degrés :

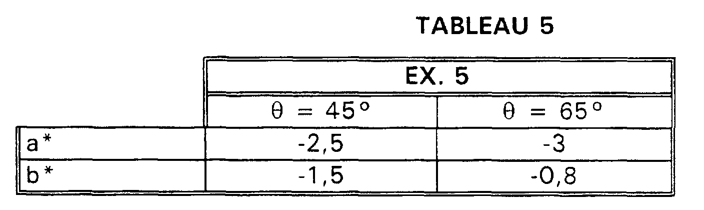

De toutes ces données peuvent être tirées les conclusions suivantes l'exemple comparatif 1, qui est en fait conforme à l'enseignement du brevet précité EP-0 638 528 offre une colorimétrie, notamment en réflexion, intéressante, ainsi qu'une sélectivité T_{L}/FS de l'ordre de 2 qui est bonne. Mais son facteur solaire est trop élevé par rapport au but fixé par l'invention.

Les exemples comparatifs 2 à 4 montrent qu'il ne suffit pas, pour abaisser le FS, de simplement augmenter l'épaisseur totale d'argent, car alors on perd les propriétés optiques en réflexion qui sont également le but de l'invention, c'est-à-dire une couleur pâle, si possible dans les bleus-verts : quel que soit le ratio Ag(3)/Ag(6), il est clair que s'il reste supérieur à 0,56, les valeurs de a* et b* en réflexion restent bien trop élevées en valeurs absolues, traduisant une couleur trop intense, dans les turquoises vifs, qui n'est pas recherchée esthétiquement dans le cadre de l'invention.

Seuls, donc, les exemples 5 et 6 parviennent à concilier bas FS et faibles valeurs de a* et b* en réflexion, au prix d'une dissymétrie très prononcée entre les épaisseurs des deux couches d'argent, la sélectivité étant également conservée proche de 2 .

Il faut également souligner l'intérêt de sélectionner au mieux les épaisseurs des couches en matériau diélectrique, ici en SnO₂, qui permettent de « jouer » sur la colorimétrie du vitrage, pour obtenir, selon les exigences esthétiques, des teintes plutôt dans les bleus ou plutôt dans les verts, par exemple.

Il est à noter qu'il est intéressant que la somme des épaisseurs optiques des trois revêtements diélectriques, ici en SnO₂ d'indice environ 1,9 à 2, reste proche de 300 nm, de manière à éviter que la couleur en réflexion puisse se rapprocher d'une teinte jaune. De même, il est avantageux que le revêtement intermédiaire soit significativement plus épais, en raisonnant toujours en épaisseur optique, que la somme des deux autres revêtements, notamment plus épaisse d'environ 20% : si le revêtement intermédiaire est significativement plus mince, la couleur en réflexion risque de tendre vers le rouge ; et si elle est significativement plus élevée, la couleur en réflexion reste dans les bleus mais la valeur du FS tend à augmenter.

Il est à souligner également qu'il est avantageux que l'épaisseur du troisième revêtement diélectrique soit relativement « mince », en tout cas davantage que celle du premier car il s'est avéré qu'un tel choix conduisait à une moindre « sensibilité » colorimétrique du vitrage, en ce sens que son aspect en réflexion restait inchangé ou quasiment inchangé même si, industriellement, l'une ou l'autre des épaisseurs des couches de l'empilement pouvait fluctuer de 1 ou 2 nm, selon les tolérances de fabrication. Cela est évidemment un avantage industriel important, puisqu'on peut ainsi diminuer fortement le taux de rebut des vitrages non conformes optiquement.

Il a été par ailleurs observé que moduler l'épaisseur du troisième revêtement diélectrique permettait d'ajuster l'intensité de la coloration en réflexion, une épaisseur trop importante tendant à faire augmenter, en valeurs absolues, la valeur de b* en réflexion, augmentation se traduisant le plus souvent par l'obtention d'une couleur bleue plus intense en réflexion.

Au vu des résultats exposés dans les tableaux précédents, on peut arguer que les valeurs de R_{L} des empilements sont un peu « élevées », en ce sens qu'elles sont de l'ordre de 15% en double-vitrage. En fait, ce niveau de réflexion s'est révélé non gênant du point de vue esthétique, car on privilégie actuellement surtout la sélection d'une teinte « neutre », ce que l'invention obtient. Cela s'est même révélé très intéressant pour au moins deux raisons :
□ en effet, en ayant une R_{L} un peu supérieure à celle rencontrée dans les empilements où l'épaisseur totale d'argent est moindre, on s'est aperçu que l'on parvenait beaucoup plus aisément à assurer la « stabilité » colorimétrique du vitrage, ce qui rejoint le commentaire précédent concernant la « non-sensibilité » vis-à-vis d'éventuelles fluctuations sur les épaisseurs des couches, mais aussi une stabilité même à angle d'incidence non normal : on voit d'après le tableau 5 qu'à incidence rasante, on garde des valeurs de a* et b* correspondant à des teintes dans les bleus ou verts, sans « basculer » vers des teintes inesthétiques telles que le rouge par exemple,
□ le niveau de R_{L} conféré par les empilements selon l'invention s'est révélé également très avantageux en ce qui concerne l'harmonie entre les « vitrages-vision » munis des empilements (et qui sont évidemment transparents) et les panneaux de parement de façade, appelés plus communément « allèges » qui leur sont associés. Ces allèges sont généralement constitués de vitrages similaires aux vitrages-vision, et même munis exactement des mêmes empilements de couches minces, mais que l'on opacifie à l'aide d'un vernis absorbant. Il est alors important d'avoir des écarts colorimétriques les plus faibles possibles entre « vitrages-vision » et « allèges »pour que, vu de l'extérieur, le bâtiment dont la façade n'est constituée que de ces deux types de vitrages paraisse harmonieuse et, globalement, de même teinte. Or, en fait, des vitrages-vision selon l'invention, avec des valeurs de R_{L} de l'ordre de 14-16% se sont révélés beaucoup plus « simples » à « accorder » colorimétriquement avec leurs allèges que des vitrages-vision de R_{L} moins élevées.

Par ailleurs, les résultats tirés du tableau 5 démontrent que les vitrages selon l'invention gardent un aspect colorimétrique en réflexion très homogène, même à des angles d'incidence jusqu'à considérés comme défavorables : à 45 ou 65°, on conserve des valeurs de a* et b* de signes négatifs, d'au plus 3 en valeurs absolues, à au plus ± 1 près par rapport aux valeurs mesurées à incidence normale.

## Revendications

1. Vitrage comprenant au moins un substrat (1) transparent muni d'un empilement de couches « A » minces comportant successivement :
□ un premier revêtement (2) en matériau diélectrique,
□ une première couche « fonctionnelle » (3) à propriétés de réflexion dans l'infrarouge, notamment métallique,
□ un second revêtement (5) en matériau diélectrique,
□ une seconde couche « fonctionnelle » (6) à propriétés de réflexion dans l'infrarouge, notamment métallique,
□ un troisième revêtement (8) en matériau diélectrique,
***caractérisé en ce que*** la somme des épaisseurs de la première et de la seconde couche fonctionnelle (3, 6) est comprise entre à 25 nm et 35 nm ***et en ce que*** le rapport de l'épaisseur de la première couche fonctionnelle (3) sur l'épaisseur de la seconde couche fonctionnelle (6) est inférieur ou égal à 0,52, de manière à ce que le vitrage présente un facteur solaire FS inférieur ou égal à 32% et une colorimétrie en réflexion extérieure correspondant à des valeurs de a* et b* négatives et inférieures à 4, et de préférence inférieures à 3, en valeurs absolues.

2. Vitrage selon la revendication 1, ***caractérisé en ce que*** le rapport de l'épaisseur de la première couche (3) sur l'épaisseur de la seconde couche fonctionnelle (6) est compris entre 0,40 et 0,50, et de préférence entre 0,45 et 0,48.

3. Vitrage selon la revendication 1 ou la revendication 2, ***caractérisé en ce* que** la somme des épaisseurs des deux couches fonctionnelles (3, 6) est comprise entre 27 et 33 nm.

4. Vitrage selon l'une des revendications précédentes, ***caractérisé en ce* qu'**une au moins des couches fonctionnelles (3, 6) est en argent ou à base d'argent.

5. Vitrage selon l'une des revendications précédentes, ***caractérisé en ce que*** la première couche fonctionnelle (3) a une épaisseur comprise entre 8 et 13 nm, ***et en ce que*** la seconde couche fonctionnelle (6) a une épaisseur comprise entre 15 et 22 nm.

6. Vitrage selon l'une des revendications précédentes, ***caractérisé en ce que*** l'épaisseur optique du premier revêtement en matériau diélectrique (2) est supérieure à l'épaisseur optique du troisième revêtement en matériau diélectrique (8), l'épaisseur optique du premier revêtement (2) correspondant notamment à au moins 110%, notamment au moins 120 à 150% et de préférence à 130 à 140% de l'épaisseur optique du troisième revêtement (8).

7. Vitrage selon l'une des revendications précédentes, ***caractérisé en ce que*** l'épaisseur optique du second revêtement en matériau diélectrique (5) est supérieure ou égale à 115% de la somme des épaisseurs optiques des deux autres revêtements (2, 8) en matériau diélectrique, et de préférence correspond à 120 à 130% de ladite somme.

8. Vitrage selon l'une des revendications précédentes, ***caractérisé en ce que*** la somme des épaisseurs optiques des trois revêtements en matériau diélectrique (2, 5, 8) est comprise entre 280 et 340 nm, notamment d'environ 300 nm.

9. Vitrage selon l'une des revendications précédentes, ***caractérisé en ce qu***'au moins une des deux couches fonctionnelles (3, 6) est surmontée d'une fine couche métallique (4, 7) « barrière » au moins partiellement oxydée, de préférence d'une épaisseur de 0,5 à 4 nm, et notamment choisie parmi un des métaux comprenant Ti, Ta, Nb, Ni, Cr, Zn, Sn ou un alliage du type acier inoxydable ou alliage Ni-Cr.

10. Vitrage selon l'une des revendications précédentes, ***caractérisé en ce qu***'au moins un des trois revêtements en matériau diélectrique (2, 5, 8) comprend au moins une couche à base d'oxyde métallique tel que Bi₂O₃, SnO₂, ZnO, Ta₂O₅, Nb₂O₅, WO₃, TiO₂ et/ou au moins une couche à base d'oxyde de silicium tel que SiO₂, SiOₓC_{y}, SiOₓN_{y} et/ou au moins une couche à base de nitrure du type Si₃N₄, AIN ou nitrure mixte SiₓAl_{y}N_{z}.

11. Vitrage selon l'une des revendications précédentes, ***caractérisé en ce que*** le troisième revêtement en matériau diélectrique (8) comprend une couche à base d'AIN, de Si₃N₄ ou d'un nitrure mixte SiₓAl_{y}N_{z}.

12. Vitrage selon l'une des revendications précédentes, ***caractérisé en ce que*** le premier et/ou le second revêtement en matériau diélectrique (2, 5) comprend, sous l'une et/ou l'autre des deux couches fonctionnelles (3, 6) une couche à base d'oxyde de zinc, et comprennent notamment une superposition de couches du type (Nb₂O₅ ou Ta₂O₅ ou WO₃ ou SnO₂ ou Bi₂O₃)/ZnO.

13. Vitrage selon l'une des revendications précédentes, ***caractérisé en ce qu***'il présente un rapport T_{L}/F_{S} au moins égal à 2.

14. Vitrage selon l'une des revendications précédentes, ***caractérisé en ce* qu'**il présente une couleur en réflexion extérieure définie par des valeurs de a* et b* de signes négatifs, d'au plus 3 en valeurs absolues à angle d'incidence de 45 ou 65°, à au plus ± 1 près par rapport aux valeurs mesurées à incidence normale.

15. Vitrage selon l'une des revendications précédentes, ***caractérisé en ce qu***'il présente une structure de vitrage multiple, notamment de double-vitrage avec un empilement de couches « A » en faces 2 et/ou 3.

16. Vitrage selon la revendication 15, ***caractérisé en ce qu****'il* présente une transmission lumineuse comprise entre 50 et 65% et un facteur solaire compris entre 25% et 32%.

17. Vitrage selon l'une des revendications précédentes, ***caractérisé en ce qu***'il comprend un substrat en verre teinté dans la masse.

## Patentansprüche

1. Verglasung, die mindestens ein transparentes Substrat (1) umfasst, das mit einem Aufbau A aus dünnen Schichten versehen ist, der aufeinander folgend
- eine erste Beschichtung (2) aus dielektrischem Material,
- eine insbesondere metallische erste Funktionsschicht (3) mit Reflexionseigenschaften im Infrarot,
- eine zweite Beschichtung (5) aus dielektrischem Material,
- eine insbesondere metallische zweite Funktionsschicht (6) mit Reflexionseigenschaften im Infrarot und
- eine dritte Beschichtung (8) aus dielektrischem Material
enthält, **dadurch gekennzeichnet, dass** die Summe aus den Dicken der ersten und zweiten Funktionsschicht (3, 6) 25 nm bis 35 nm beträgt, **und dass** das Dickenverhältnis von erster Funktionsschicht (3) zu zweiter Funktionsschicht (6) kleiner oder gleich 0,52 derart ist, dass die Verglasung einen Gesamtenergiedurchlaßgrad g von kleiner oder gleich 32 % und einen Farbton bei Reflexion in Außenansicht aufweist, der Werten von a* und b* entspricht, die negativ und als Absolutwerte kleiner als 4 und vorzugsweise kleiner als 3 sind.

2. Verglasung nach Anspruch 1, **dadurch gekennzeichnet, dass** das Dickenverhältnis von erster Schicht (3) zu zweiter Funktionsschicht (6) 0,40 bis 0,50 und vorzugsweise 0,45 bis 0,48 beträgt.

3. Verglasung nach Anspruch 1 oder 2, **dadurch gekennzeichnet, dass** die Summe der Dicken der beiden Funktionsschichten (3, 6) 27 bis 33 nm beträgt.

4. Verglasung nach einem der vorhergehenden Ansprüche, **dadurch gekennzeichnet, dass** mindestens eine der Funktionsschichten (3, 6) aus Silber besteht oder auf der Basis von Silber ist.

5. Verglasung nach einem der vorhergehenden Ansprüche, **dadurch gekennzeichnet, dass** die Dicke der ersten Funktions-schicht (3) 8 bis 13 nm, **und dass** die Dicke der zweiten Funktionsschicht (6) 15 bis 22 nm beträgt.

6. Verglasung nach einem der vorhergehenden Ansprüche, **dadurch gekennzeichnet, dass** die optische Dicke der ersten Beschichtung (2) aus dielektrischem Material größer als die optische Dicke der dritten Beschichtung (8) aus dielektrischem Material ist, wobei die optische Dicke der ersten Beschichtung (2) insbesondere mindestens 110 %, speziell mindestens 120 bis 150 % und vorzugsweise 130 bis 140 % der optischen Dicke der dritten Beschichtung (8) entspricht.

7. Verglasung nach einem der vorhergehenden Ansprüche, **dadurch gekennzeichnet, dass** die optische Dicke der zweiten Beschichtung (5) aus dielektrischem Material größer oder gleich 115 % der Summe aus den optischen Dicken der zwei anderen Beschichtungen (2, 8) aus dielektrischem Material und vorzugsweise 120 bis 130 % dieser Summe entspricht.

8. Verglasung nach einem der vorhergehenden Ansprüche, **dadurch gekennzeichnet, dass** die Summe der optischen Dicken der drei Beschichtungen (2, 5, 8) aus dielektrischem Material 280 bis 340 nm und insbesondere etwa 300 nm beträgt.

9. Verglasung nach einem der vorhergehenden Ansprüche, **dadurch gekennzeichnet, dass** mindestens eine der beiden Funktions-schichten (3, 6) mit einer wenigstens teilweise aufoxidierten feinen metallischen Barriereschicht (4, 7) mit einer Dicke von vorzugsweise 0,5 bis 4 nm bedeckt ist, die insbesondere aus einem der Metalle Ti, Ta, Nb, Ni, Cr, Zn und Sn oder einer Legierung vom Typ rostfreier Stahl oder Ni-Cr-Legierung ausgewählt ist.

10. Verglasung nach einem der vorhergehenden Ansprüche, **dadurch gekennzeichnet, dass** wenigstens eine der drei Beschichtungen (2, 5, 8) aus dielektrischem Material mindestens eine Schicht auf der Basis eines Metalloxids wie Bi₂O₃, SnO₂, ZnO, Ta₂O₅, Nb₂O₅, WO₃ und TiO₂ und/oder mindestens eine Schicht auf der Basis von Siliciumoxid wie SiO₂, SiOₓC_{y} und SiOₓN_{y} und/oder mindestens eine Schicht auf der Basis eines Nitrids wie Si₃N₄, AlN bzw. Mischnitrids, SiₓAl_{y}N_{z}, umfasst.

11. Verglasung nach einem der vorhergehenden Ansprüche, **dadurch gekennzeichnet, dass** die dritte Beschichtung (8) aus dielektrischem Material eine Schicht auf der Basis von AlN, Si₃N₄ oder einem Mischnitrid, SiₓAl_{y}N_{z}, umfasst.

12. Verglasung nach einem der vorhergehenden Ansprüche, **dadurch gekennzeichnet, dass** die erste und/oder zweite Beschichtung (2, 5) aus dielektrischem Material unter der einen und/oder anderen der beiden Funktionsschichten (3, 6) eine Schicht auf der Basis von Zinkoxid und insbesondere eine Übereinanderanordnung von Schichten des Typs (Nb₂O₅ oder Ta₂O₅ oder WO₃ oder SnO₂ oder Bi₂O₃)/ZnO umfasst.

13. Verglasung nach einem der vorhergehenden Ansprüche, **dadurch gekennzeichnet, dass** sie ein Verhältnis von T_{L}/g von mindestens 2 aufweist.

14. Verglasung nach einem der vorhergehenden Ansprüche, **dadurch gekennzeichnet, dass** sie einen Farbton bei Reflexion in Außenansicht aufweist, der durch Werte von a* und b*, mit negativen Vorzeichen, von höchstens 3 als Absolutwerte bei einem Blickwinkel von 45° bzw. 65° mit einer Abweichung von höchstens ±1 in Bezug auf die Meßwerte bei senkrechtem Lichteinfall definiert ist.

15. Verglasung nach einem der vorhergehenden Ansprüche, **dadurch gekennzeichnet, dass** sie die Struktur einer Mehrfachverglasung, insbesondere einer Doppelverglasung, mit einem Schichtaufbau A auf Position 2 und/oder 3 aufweist.

16. Verglasung nach Anspruch 15, **dadurch gekennzeichnet, dass** sie einen Lichttransmissionsgrad von 50 bis 65 % und einen Gesamtenergiedurchlaßgrad von 25 bis 32 % aufweist.

17. Verglasung nach einem der vorhergehenden Ansprüche, **dadurch gekennzeichnet, dass** sie ein Substrat aus Farbglas enthält.

## Claims

1. Glazing comprising at least one transparent substrate (1) provided with a stack of thin layers A successively comprising:
- a first, dielectric material coating (2),
- a first, functional layer (3) having infrared reflection properties and in particular of metal,
- a second, dielectric material coating (5),
- a second, functional layer (6) having infrared reflection properties and in particular of metal,
- a third, dielectric material coating (8),
**characterized in that** the sum of the thicknesses of the first and second functional layers (3, 6) is between 25 and 35 nm and **in that** the ratio of the thickness of the first functional layer (3) to the thickness of the second functional layer (6) is equal to or lower than 0.52, so that the glazing has a solar factor SF equal to or below 32% and a colorimetry in external reflection corresponding to negative a* and b* values and below 4 and preferably below 3 in absolute values.

2. Glazing according to claim 1, **characterized in that** the ratio of the thickness of the first layer (3) to the thickness of the second functional layer (6) is between 0.40 and 0.50 and preferably between 0.45 and 0.48.

3. Glazing according to claim 1 or 2, **characterized in that** the sum of the thicknesses of the two functional layers (3, 6) is between 27 and 33 nm.

4. Glazing according to one of the preceding claims, **characterized in that** at least one of the functional layers (3, 6) is of silver or based on silver.

5. Glazing according to one of the preceding claims, **characterized in that** the first functional layer (3) has a thickness between 8 and 13 nm and **in that** the second functional layer (6) has a thickness between 15 and 22 nm.

6. Glazing according to one of the preceding claims, **characterized in that** the optical thickness of the first, dielectric material coating (2) exceeds the optical thickness of the third, dielectric material coating (8), the optical thickness of the first coating (2) corresponding to at least 110%, particularly at least 120 to 150% and preferably 130 to 140% of the optical thickness of the third coating (8).

7. Glazing according to one of the preceding claims, **characterized in that** the optical thickness of the second, dielectric material coating (5) is equal to or exceeds 115% of the sum of the optical thicknesses of the two other, dielectric material coatings (2, 8) and preferably corresponds to 120 to 130% of said sum.

8. Glazing according to one of the preceding claims, **characterized in that** the sum of the optical thicknesses of the three dielectric material coatings (2, 5, 8) is between 280 and 340 nm and in particular approximately 300 nm.

9. Glazing according to one of the preceding claims, **characterized in that** at least one of the two functional layers (3, 6) is surmounted by an at least partly oxidized thin, metallic, "barrier" layer (4, 7), preferably having a thickness of 0.5 to 4 nm and in particular chosen from among one of the metals Ti, Ta, Nb, Ni, Cr, Zn, Sn or an alloy of the stainless steel or Ni-Cr type.

10. Glazing according to one of the preceding claims, **characterized in that** at least one of the three dielectric material coatings (2, 5, 8) comprises at least one layer based on a metal oxide such as Bi₂O₃, SₙO₂, ZₙO, Ta₂O₅, Nb₂O₅, WO₃, TiO₂ and/or at least one layer based on silicon oxide such as SiO₂, SiOₓC_{y}, SiOₓN_{y} and/or at least one layer based on nitride of the type Si₃N₄, AlN or mixed nitride SiₓAl_{y}N_{z}.

11. Glazing according to one of the preceding claims, **characterized in that** the third, dielectric material coating (18) comprises a layer based on AlN, Si₃N₄ or a mixed oxide SiₓAl_{y}N_{z}.

12. Glazing according to one of the preceding claims, **characterized in that** the first and/or second dielectric material coating (2, 5) comprises, under one and/or the other of the two functional layers (3, 6), a layer based on zinc oxide and more particularly comprising a superimposing of layers of type (Nb₂O₅ or Ta₂O₅ or WO₃ or SnO₂ or Bi₂O₃/ZnO.

13. Glazing according to one of the preceding claims, **characterized in that** it has a T_{L}/SF ratio of at least 2.

14. Glazing according to one of the preceding claims, **characterized in that** it has a colour in external reflection defined by a* and b*, negative sign values of at the most 3 in absolute values with an angle of incidence of 45 or 65° to within ± 1 compared with values measured under normal incidence.

15. Glazing according to one of the preceding claims, **characterized in that** it has a multiple and in particular double glazing structure with a stack of A layers on faces 2 and/or 3.

16. Glazing according to claim 15, **characterized in that** it has a light transmission between 50 and 65% and a solar factor between 25 and 32%.

17. Glazing according to one of the preceding claims, **characterized in that** it comprises a mass tinted glass substrate.
